# EUROPEAN PATENT SPECIFICATION

(11) **EP 1 029 767 B1**
(45) Date of publication and mention of the grant of the patent: **31.03.2004**
(21) Application number: 00830026.1
(22) Date of filing: 20.01.2000
(51) Int. Cl.: B62B 3/14

(54) **Shopping trolley**
Einkaufswagen
Caddy pour les courses

(30) Priority: 15.02.1999 IT MI990083
(43) Date of publication of application: 23.08.2000
(73) Proprietor: Negri, Antonio, 20060 Truccazzano (MI) (IT); Contu, Franco Pasquale, 20065 Inzago (MI) (IT)
(72) Inventor: Negri, Antonio, 20060 Truccazzano (MI) (IT)
(74) Representative: Petraz, Gilberto

(56) References cited:
- WO-A-97/29938
- DE-A- 4 202 428
- US-A- 4 805 935
- US-A- 5 330 210

## Description

This invention concerns the combination of a shopping trolley and a toy car fitted on the trolley so that children can get into the toy car, play inside and be driven by an adult pushing the trolley as he/she does the shopping.

### BACKGROUND TO THE INVENTION

US-A-4.805.935 provides a trolley wherein the child can only remain seated on a small seat, below the shopping basket, while the adult shops. However this solution entails problems of position and psychological tension due to the weight overhead and the danger of falling down from the trolley; these problems also affect the person pushing the trolley.

US-A-5.330.210 provides a trolley according to the preamble of claim 1 which extends vertically and has the body of a toy car installed, completely open, on which the child sits astride; this solution has problems of stability, safety and tension for the child and for the person pushing the trolley.

DE-A-4.202.428 describes a shopping trolley which provides means to attach a child's pushchair, the two elements remaining autonomous and the child solidly protected by the pushchair. When the pushchair is used for rather bigger children, these children find that they have the trolley in front of their eyes, with problems of visibility, identification and frustration.

WO-A-97/29938 also shows a combination of a pushchair and a shopping trolley; this combination, however, is more difficult to use, for the person pushing the trolley, than that disclosed in DE-A-4.202.428.

These drawbacks are solved by a shopping trolley according to claim 1.

### SUMMARY OF THE INVENTION

The combination of a shopping trolley and a closed toy car, able to contain at least a child and located in the front part of the trolley, as provided in this invention, has the further advantage that it allows children to play freely inside the toy car in a controlled and protected environment and, as it is at the front of the trolley, it allows them to pretend to drive the car, thus ensuring enjoyment for the child and convenience for the adult who does not need to lead the child by hand or carry him in his arms.

Even if the invention is based on the idea of combining two existing products, since both the toy car and the trolley are involved, it provides new advantages, inasmuch as the children feel that they are helping the adult to carry the shopping home and, at the same time, they can satisfy their innate curiosity since their vision is unrestricted, and they are free inside the driver's compartment, at the same time feeling safe and protected, which makes them keep quiet so that they do not distract the adult from the shopping.

### BRIEF DESCRIPTION OF THE DRAWINGS

We shall now describe the invention in further detail, with examples, with reference to two preferential embodiments which are not intended to restrict the field of protection requested and which are shown by the accompanying drawings wherein:

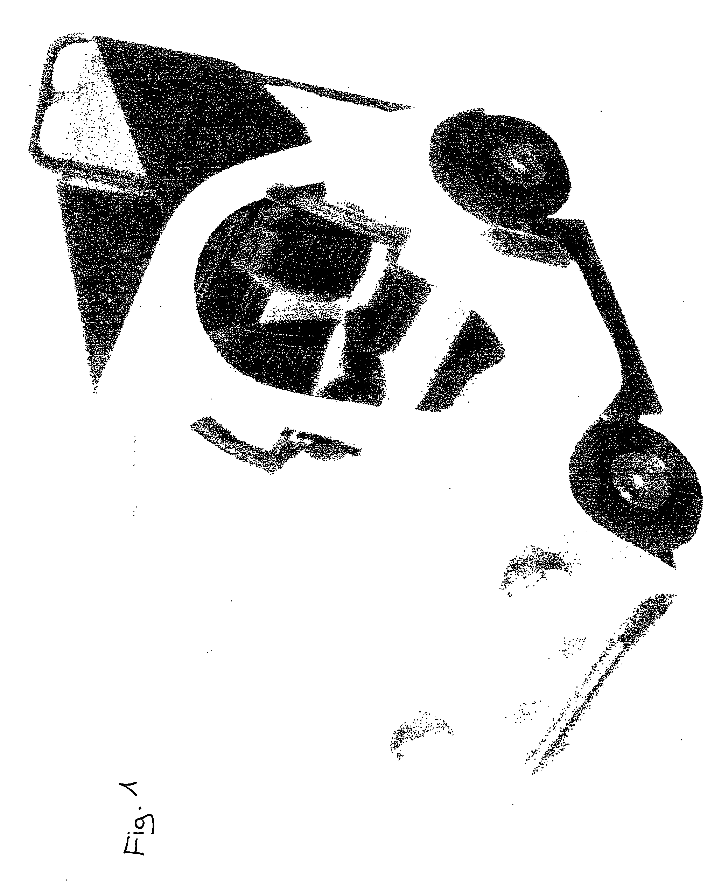

- Fig. 1: shows the trolley according to the invention comprising a toy car plastic body representing the closed body of a toy car and bent steel tube chassis.
- Fig. 2: shows the trolley according to the invention with a boxed and welded steel chassis with a plane surface on which the toy car plastic body is fitted.
- Fig. 3: is a view of Fig. 2 from another side.

### DESCRIPTION OF THE PREFERRED EMBODIMENT

As can be seen from the Figures, the trolley comprises a metal chassis (with a plane surface) and four revolving wheels shaped like the wheels of a toy car. On the metal chassis are fitted a food wire-netting basket (hamper) and a plane surface on which the plastic toy car body is fitted, able to contain at least one child.

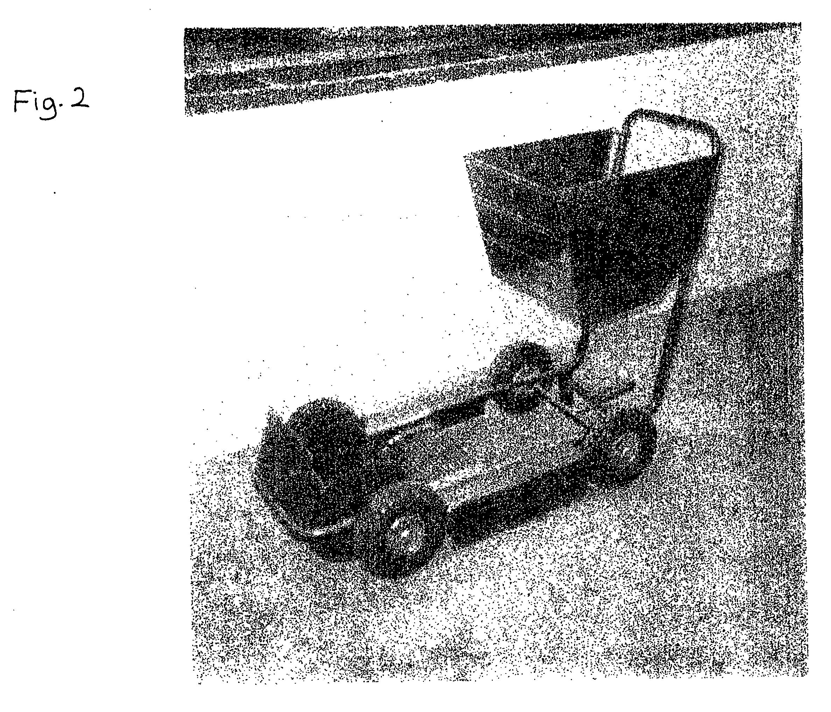

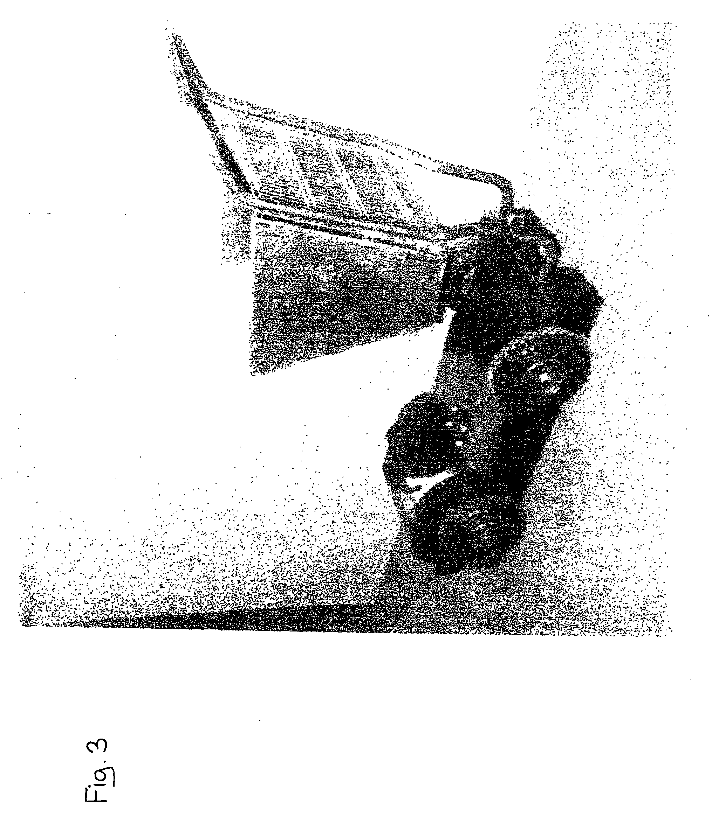

Figs. 2 and 3 show a trolley according to a second embodiment which has a boxed and welded chassis with a plane surface in the front part on which the toy car plastic body is fitted.

## Claims

1. Shopping trolley comprising a metal chassis, a plastic toy car and revolving wheels, said plastic toy car being fitted on said metallic chassis **characterized in that** said plastic toy car is shaped so as to define an internal seat wherein at least one child is able to seat inside said plastic toy car on said internal seat.

2. Shopping trolley as in Claim 1, **characterized in that** said metal chassis is formed by a bent steel tube which comprises an upper arm able to permit any user to control and command the trolley and a front supporting plane surface which supports four of said revolving wheels.

3. Shopping trolley as in Claim 2, **characterized in that** said metal chassis is made of welded steel and has an upper basket cooperating with said upper arm.

## Patentansprüche

1. Einkaufswagen, der ein Metall-Chassis, ein Kunststoff-Spielzeugauto und sich drehende Räder umfasst, wobei das Kunststoff-Spielzeugauto an dem Metall-Chassis angebracht ist, **dadurch gekennzeichnet, dass** das Kunststoff-Spielzeugauto so geformt ist, dass es einen inneren Sitz bildet, wobei wenigstens ein Kind im Inneren des Kunststoff-Spielzeugautos auf dem inneren Sitz sitzen kann.

2. Einkaufswagen nach Anspruch 1, **dadurch gekennzeichnet, dass** das Metall-Chassis durch ein gebogenes Stahlrohr, das einen oberen Arm umfasst, der es einem beliebigen Benutzer ermöglicht, den Einkaufswagen zu lenken und zu steuern, sowie eine vordere tragende plane Fläche gebildet wird, die vier der sich drehenden Räder trägt.

3. Einkaufswagen nach Anspruch 2, **dadurch gekennzeichnet, dass** das Metall-Chassis aus geschweißtem Stahl besteht und einen oberen Korb aufweist, der mit dem oberen Arm zusammenwirkt.

## Revendications

1. Chariot de supermarché comprenant un châssis métallique, une voiture jouet
en plastique et des roues rotatives, ladite voiture jouet en plastique étant montée sur ledit châssis métallique, **caractérisé en ce que** ladite voiture jouet en plastique est conformée de manière à définir un siège intérieur dans lequel au moins un enfant peut s'asseoir à l'intérieur ladite voiture jouet en plastique sut ledit siège intérieur.

2. Chariot de supermarché selon la revendication 1, **caractérisé en ce que** ledit
châssis métallique est formé d'un tube d'acier coudé qui comprend un bras supérieur apte à permettre à un utilisateur de contrôler et commander le chariot et une surface plane avant de support qui supporte quatre desdites roues rotatives.

3. Chariot de supermarché selon la revendication 2, **caractérisé en ce que** ledit
châssis métallique est fait d'acier soudé et possède un panier qui coopère avec ledit bras supérieur.
